# EUROPEAN PATENT APPLICATION

(11) **EP 4 411 617 A1**
(43) Date of publication of application: **07.08.2024**
(21) Application number: 23215842.8
(22) Date of filing: 12.12.2023
(51) Int. Cl.: G06Q 20/34, G07F 7/08, G06Q 20/20

(54) **ASSISTING DEVICE, TRANSACTION MANAGEMENT SYSTEM, AND METHOD**

(30) Priority: 01.02.2023 JP 2023014206
(71) Applicant: Toshiba Tec Kabushiki Kaisha, Shinagawa-ku Tokyo 141-8562 (JP)
(72) Inventor: Inoshita, Takeshi, Tokyo 141-8562 (JP)
(74) Representative: Bandpay & Greuter

(57) **Abstract**

An assisting device that assists in inputting card information for credit card payment, includes a display and a processor configured to acquire a transaction amount from a registration device that registers information on an item, determine whether the acquired transaction amount is less than or equal to a threshold, and upon determining that the acquired transaction amount is less than or equal to the threshold, control the display to display a first guide screen indicating that reading methods including non-contact IC wireless reading, magnetic stripe reading, and IC chip contact reading are available for inputting the card information, and upon determining that the transaction amount is greater than the threshold, control the display to display a second guide screen indicating that reading methods including the magnetic stripe reading and the IC chip contact reading and not including the non-contact IC wireless reading are available for inputting the card information.

## Description

### FIELD

Embodiments of the present disclosure relate generally to an assisting device, a transaction management system, and a method.

### BACKGROUND

In the related art, a terminal device for performing credit card payment can use three types of reading methods to obtain credit card information: magnetic stripe reading, IC chip contact reading, and non-contact IC wireless reading. Such a related-art terminal device displays a guide screen for informing an operator, who performs an operation for reading credit card information for credit card payment, about available reading methods.

Meanwhile, when a transaction amount is greater than an upper limit (for example, an upper limit amount of 10,000 yen), acquisition of credit card information by the non-contact IC wireless reading method is not permitted. However, the related-art guide screen presents the non-contact IC wireless reading method regardless of the transaction amount. Therefore, in the related-art terminal device, when credit card information is acquired by the non-contact IC wireless reading method for a transaction with a transaction amount greater than the upper limit, the operator is requested to perform another reading method.

Such a process is not preferable because it requires duplicate efforts, reduces the satisfaction level of the user, and increases the time required to complete checkout.

### DISCLOSURE OF THE INVENTION

To this end, an assisting device, a method for assisting in inputting card information for credit card payment and a transaction management system according to appended claims are provided.

### DESCRIPTION OF THE DRAWINGS

FIG. 1 is a schematic diagram illustrating an example of a configuration of a transaction management system according to a first embodiment.
FIG. 2 is a block diagram illustrating an example of a hardware configuration of a registration device.
FIG. 3 is a block diagram illustrating an example of a hardware configuration of a payment device.
FIG. 4 is a block diagram illustrating an example of a functional configuration of a control unit of the payment device.
FIG. 5 is a diagram illustrating an example of a transaction process performed by the transaction management system.
FIG. 6 is a diagram illustrating an example of a three-way waiting screen.
FIG. 7 is a diagram illustrating an example of a two-way waiting screen.
FIG. 8 is a schematic diagram illustrating an example of a configuration of a transaction management system according to a second embodiment.
FIG. 9 is a diagram illustrating an example of a transaction process performed by the transaction management system of the second embodiment.

### DETAILED DESCRIPTION

In general, according to one embodiment, there is provided an assisting device capable of reducing the workload and time required for credit card payment and improving the operating efficiency of a payment system.

An embodiment of this disclosure provides an assisting device that assists in inputting card information for credit card payment, the assisting device comprising: a display device; and a processor configured to: acquire a transaction amount from a registration device that registers information on an item to be purchased, determine whether the acquired transaction amount is less than or equal to a threshold, and upon determining that the acquired transaction amount is less than or equal to the threshold, control the display device to display a first guide screen indicating that reading methods including non-contact IC wireless reading, magnetic stripe reading, and IC chip contact reading are available for inputting the card information, and upon determining that the transaction amount is greater than the threshold, control the display device to display a second guide screen indicating that reading methods including the magnetic stripe reading and the IC chip contact reading and not including the non-contact IC wireless reading are available for inputting the card information.

### (First Embodiment)

Hereinafter, embodiments will be described with reference to the drawings. The present disclosure is not limited to the embodiments described below. For example, in an example described below, the assisting device is a payment device that receives operations related to payment in a semi-self-service point-of-sale (POS) system in which a store clerk performs operations related to item registration and a customer performs operations related to payment. However, the present disclosure is not limited to this example. As another example, the assisting device may be a payment device with which a customer performs operations related to payment. As another example, the assisting device may be a self-service POS terminal in which a customer performs operations related to item registration and payment, or a face-to-face POS terminal that is a single payment device with which a store clerk performs operations related to item registration and a customer performs operations related to payment. Furthermore, the assisting device may be a payment device for a store clerk to perform operations related to payment.

In the embodiments described below, the registration device performs item registration by registering item information in a storage unit of the registration device. However, the present disclosure is not limited to this example. For example, the registration device may be configured to register item information in a server device that is separately managed by a store. More specifically, the registration device may be configured to temporarily store input item identification information, transmit the item identification information to the server device, and cause the server device to register item information corresponding to the item identification information. In other words, the registration device may be configured to temporarily store (register) item identification information that is a part of item information. In the present application, registering item information by the registration device encompasses registering item information in a storage unit of the registration device based on input item identification information and registering item information in an external storage device.

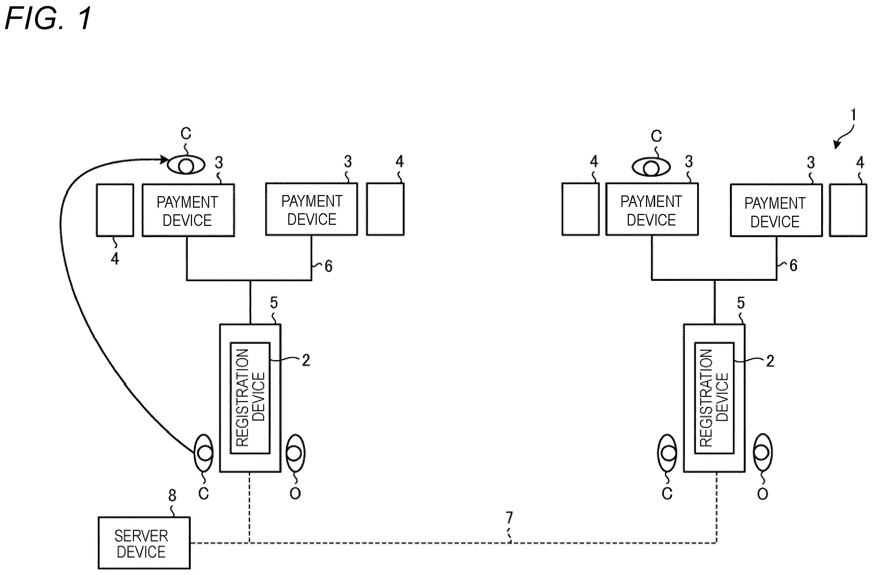

FIG. 1 is a schematic diagram illustrating an example of a configuration of a transaction management system 1 according to a first embodiment. The transaction management system 1 includes a plurality of registration devices 2 and a plurality of payment devices 3. Each registration device 2 is disposed on a counter 5. Placement tables 4 for placing item baskets are disposed next to the payment devices 3. Two payment devices 3 are connected to each registration device 2 via a connection interface 6 to be able to communicate with the registration device 2.

The registration device 2 is operated by a store clerk O. The registration device 2 executes a registration process for items to be purchased by (or traded with) a customer C. The registration process includes registering information on an item to be purchased and calculating a transaction amount for the item.

The payment device 3 of the present embodiment is an example of an assisting device. The payment device 3 is operated by the customer C. The payment device 3 acquires transaction information from the registration device 2 and executes a payment process. The transaction information is information necessary for the customer C to make a payment with the payment device 3 and includes item information (such as item names, unit prices, quantities, and the like) and a transaction amount of registered items. The payment process is executed by the payment device 3 to enable the customer C to make a payment. A payment process for cash payment includes, for example, displaying transaction information, calculating the amount of change, and returning the change; and a payment process for cashless payment includes transmitting and receiving various types of information to and from a payment server of a payment company. Cashless payment includes, in addition to credit card payment, electronic money payment and code payment using barcodes and two-dimensional codes. In a case where the registration device 2 causes a server device 8 (described later) to register item information, the payment device 3 acquires transaction information from the server device 8.

The outline of a transaction process performed by the transaction management system 1 for the customer C is as follows. For example, the registration device 2 generates transaction information including the item information and the transaction amount of items to be purchased by the customer C. The registration device 2 selects a payment device 3 from the payment devices 3 connected to the registration device 2 as a data transfer destination and transfers the transaction information to the selected payment device 3. The customer C moves to the payment device 3 to which the transaction information has been transferred from the registration device 2 and operates the payment device 3 to make a payment.

The registration device 2 is connected to a server device 8, which is installed in an office of the store, via a network 7 such as a local area network (LAN). The server device 8 manages various types of information of the store.

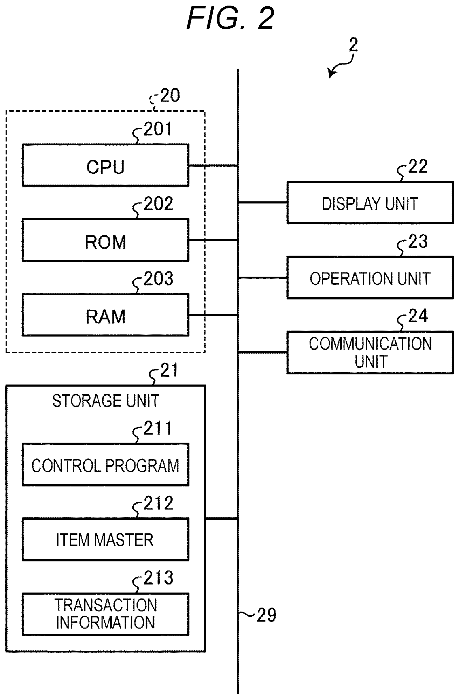

FIG. 2 is a block diagram illustrating an example of a hardware configuration of the registration device 2. The registration device 2 includes a control unit 20, a storage unit 21, a display unit 22, an operation unit 23, and a communication unit 24. The registration device 2 may further include a buzzer, a speaker, an indicator lamp, and the like. Note that the indicator lamp is a tower-shaped device in which lamps with different colors are stacked. The units (such as the control unit 20, the storage unit 21, the display unit 22, the operation unit 23, and the communication unit 24) are connected via a bus 29 or the like to be able to communicate with each other.

The display unit 22 is a display device such as a liquid crystal panel and displays various types of information for the operator (the store clerk 0 in this example) of the registration device 2. The operation unit 23 is for inputting information to the control unit 20 and includes a keyboard, a touch panel, and the like.

The communication unit 24 is an interface that enables the control unit 20 to communicate with external devices (such as the payment device 3 and the server device 8). Through the communication, the control unit 20 transmits and receives information or data to and from the external devices.

The control unit 20 includes a processor such as a central processing unit (CPU) 201, a read-only memory (ROM) 202, and a random access memory (RAM) 203.

The CPU 201 controls the overall operation of the registration device 2. The ROM 202 stores various types of programs and information. The RAM 203 is used as a work area for the CPU 201. The CPU 201 loads programs and information stored in the ROM 202 and the storage unit 21 into the RAM 203 and executes the programs so that the control unit 20 functions as various processing units that perform various control processes of the registration device 2.

The storage unit 21 is implemented by a storage medium such as a hard disk drive (HDD) or a flash memory, and retains stored information even when the power is cut off. The storage unit 21 stores a control program 211, an item master database 212 (hereinafter simply referred to as the item master 212), transaction information 213, and the like.

The control program 211 causes the control unit 20 to implement, for example, a function for transmitting and receiving information to and from external devices (such as the payment device 3 and the server device 8) and a function for registering items (or generating the transaction information 213) based on an operation received by the operation unit 23.

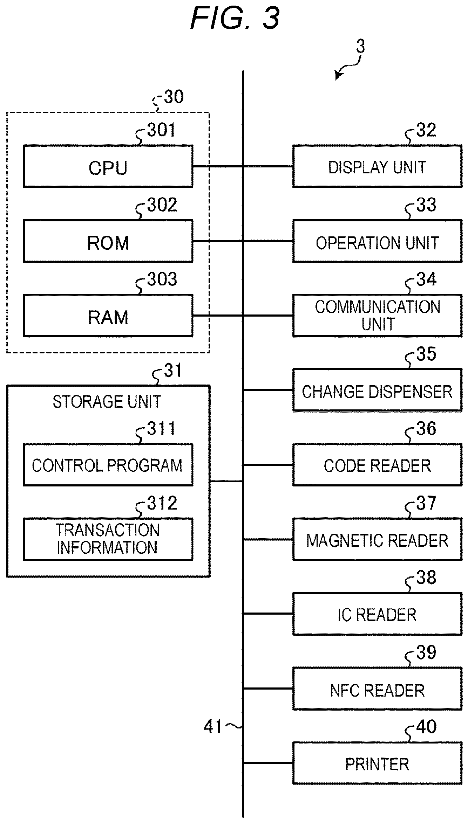

FIG. 3 is a block diagram illustrating an example of a hardware configuration of the payment device 3. The payment device 3 includes a control unit 30, a storage unit 31, a display unit 32, an operation unit 33, a communication unit 34, a change dispenser 35, a code reader 36, a magnetic reader 37, an IC reader 38, an NFC reader 39, and a printer 40. The payment device 3 may further include a buzzer, a speaker, an indicator lamp, and the like. The units (such as the control unit 30, the storage unit 31, the display unit 32, the operation unit 33, the communication unit 34, the change dispenser 35, the code reader 36, the magnetic reader 37, the IC reader 38, the NFC reader 39, and the printer 40) are connected via a bus 41 or the like to be able to communicate with each other.

The display unit 32 is a display device such as a liquid crystal panel and displays various types of information for the operator of the payment device 3. The operation unit 33 is for inputting information to the control unit 30 and includes a keyboard, a touch panel, and the like.

The communication unit 34 is a network interface circuit that enables the control unit 30 to communicate with external devices (such as the registration device 2 and the server device 8). Through the communication, the control unit 30 transmits and receives information or data to and from the external devices.

The change dispenser 35 receives and returns bills and coins. When cash is received from the customer and the amount of received cash is greater than the transaction amount, the change dispenser 35 returns the difference (or change) in cash.

The code reader 36 reads code symbols such as barcodes and two-dimensional codes and outputs decoded information.

The magnetic reader 37 is provided near a slit through which a credit card is passed and reads information recorded on a magnetic stripe provided on the credit card. The IC reader 38 reads information stored in an IC chip provided on a credit card or the like.

The NFC reader 39 is a communication unit supporting near field communication (NFC) technology and reads credit card information and electronic money information stored in a non-contact IC by short-range wireless communication. Non-contact ICs are attached to cards such as credit cards, mobile terminals such as smartphones, and the like. Note that the magnetic reader 37, the IC reader 38, and the NFC reader 39 may be external devices attached to the payment device. The magnetic reader 37, the IC reader 38, and the NFC reader 39 may be implemented by separate devices or the same device (a so-called payment terminal).

The printer 40 prints transaction information on receipt paper and outputs the receipt paper after a payment process.

The control unit 30 includes a CPU 301, a ROM 302, and a RAM 303.

The CPU 301 controls the overall operation of the payment device 3. The ROM 302 stores various types of programs and information. The RAM 303 is used as a work area for the CPU 301. The CPU 301 loads programs and information stored in the ROM 302 and the storage unit 31 into the RAM 303 and executes the programs so that the control unit 30 functions as various processing units that perform various control processes of the payment device 3.

The storage unit 31 is implemented by a storage medium, such as an HDD or a flash memory, and retains stored information even when the power is cut off. The storage unit 31 stores a control program 311, transaction information 312, and the like.

The control program 311 causes the control unit 30 to implement, for example, a function for transmitting and receiving information to and from external devices (such as the registration device 2 and the server device 8) and a function for performing a payment process related to the transaction information 312 based on an operation received by the operation unit 33.

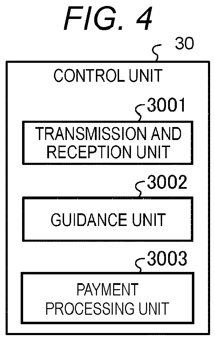

FIG. 4 is a block diagram illustrating an example of a functional configuration of the control unit 30 of the payment device 3. By executing programs, the control unit 30 implements various processing units such as a transmission and reception unit 3001, a guidance unit 3002, and a payment processing unit 3003.

The transmission and reception unit 3001 is an example of an acquisition unit that acquires a transaction amount from the registration device, which registers information on items to be purchased, and receives transaction information transmitted (output) by the registration device 2 (or the server device 8). The transaction information received by the transmission and reception unit 3001 is stored in the storage unit 31 as the transaction information 312 by the control unit 30 (the transmission and reception unit 3001 or any other functional unit).

The guidance unit 3002 provides guidance (or operation assistance) when a customer performs an operation. Specifically, the guidance unit 3002 controls the display unit 32 to display a guidance screen and/or a speaker to sound a buzzer or provide audio guidance .

The guidance unit 3002 compares the transaction amount with a threshold during credit card payment and changes the guide screen to be displayed on the display unit 32 depending on whether the transaction amount is less than or equal to the threshold. Specifically, when the transaction amount is less than or equal to the threshold, a so-called three-way waiting screen is displayed. When the transaction amount is greater than the threshold, a two-way waiting screen is displayed.

Here, the three-way waiting screen is an example of a first guidance screen and indicates that three types of reading methods including magnetic stripe reading, IC chip contact reading, and non-contact IC wireless reading are available for an operation to input credit card information in credit card payment.

The two-way waiting screen is an example of a second guide screen and indicates that two reading methods (i.e., the magnetic stripe reading and the IC chip contact reading) other than the non-contact IC wireless reading are available.

The payment processing unit 3003 performs a payment process based on transaction information received or acquired by the transmission and reception unit 3001. Specifically, the payment processing unit 3003 receives an operation for payment of a transaction recorded in the transaction information 312 from the customer via the operation unit 33 and performs a payment process using a device (such as the change dispenser 35, the code reader 36, the magnetic reader 37, the IC reader 38, or the NFC reader 39) corresponding to the output of the operation unit 33.

Here, the transaction information 312 will be described. The transaction information 312 stored in the storage unit 31 includes, for example, the following information.
· Transaction code
Terminal code (identification information of the registration device 2 or the server device 8)
· Start time
· Payment instruction time
· Payment device code
· Transaction amount
· Payment method
Item information (an item code, an item name, price, quantity, and the like)
· Registration time

The transaction code is a unique code issued for each transaction. The terminal code is a code that can identify (or is unique to) a terminal (such as the registration device 2 or the server device 8) that outputs the transaction information. The start time is the time when the transaction is started. The payment instruction time is the time when the registration device 2 (or the server device 8), which has completed item registration, outputs the transaction information. The payment device code is a code that can identify (or is unique to) each payment device 3 and is specified by an operation performed by a store clerk on the registration device 2 (or specified by the server device 8) that outputs the transaction information.

The transaction amount is the amount of money related to a transaction, that is, the total amount of payment for registered items. The payment method is one of payment methods selected at the registration device 2. Options of payment methods presented by the registration device 2 to the store clerk include cash payment, credit card payment, electronic money payment, code payment, and the like. The store clerk asks a payment method desired by the customer and inputs the payment method to the registration device 2.

The item information is information about an item related to a transaction and includes, for example, the item code, the item name, the price, and the quantity of a registered item. When multiple items are purchased in one transaction, multiple sets of item information are registered in association with one transaction code. The registration time is information indicating the time when the item information is registered.

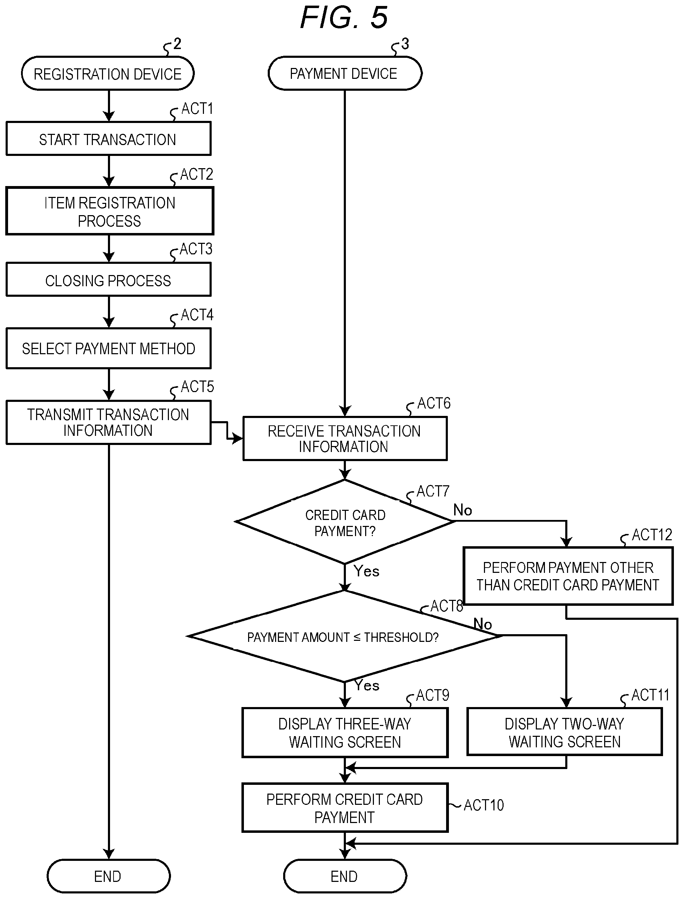

FIG. 5 is a diagram illustrating an example of a transaction process performed by the transaction management system 1. In the present embodiment, the registration device 2 receives an operation from a store clerk, starts a transaction (ACT 1), performs an item registration process (ACT 2), performs a closing process (ACT 3), and receives a selection of a payment method (ACT 4). Options presented by the registration device 2 at ACT 4 include, for example, cash payment, credit card payment, electronic money payment, and code payment. The registration device 2 transmits (or outputs) transaction information including the selected payment method to the payment device 3 (ACT 5) .

When the control unit 30 (or the transmission and reception unit 3001) of the payment device 3 receives (or acquires) the transaction information from the registration device 2, the received transaction information is stored in the storage unit 31 as the transaction information 312 (ACT 6). When the payment method included in the transaction information 312 is not the credit card payment (No at ACT 7), the control unit 30 of the payment device 3 performs a payment process using the payment method other than the credit card payment (ACT 12) and then ends the transaction process. Other payment methods include cash payment, electronic money payment, and code payment.

When the payment method included in the transaction information 312 is the credit card payment (Yes at ACT 7), the control unit 30 (or the guidance unit 3002) of the payment device 3 determines whether a payment amount is less than or equal to a threshold (ACT 8). Here, the payment amount corresponds to the "transaction amount" included in the transaction information 312. The threshold is, for example, "10,000 yen". Needless to say, at ACT 8, the threshold may be set to "10,001 yen", and the control unit 30 may determine whether the payment amount is less than the threshold.

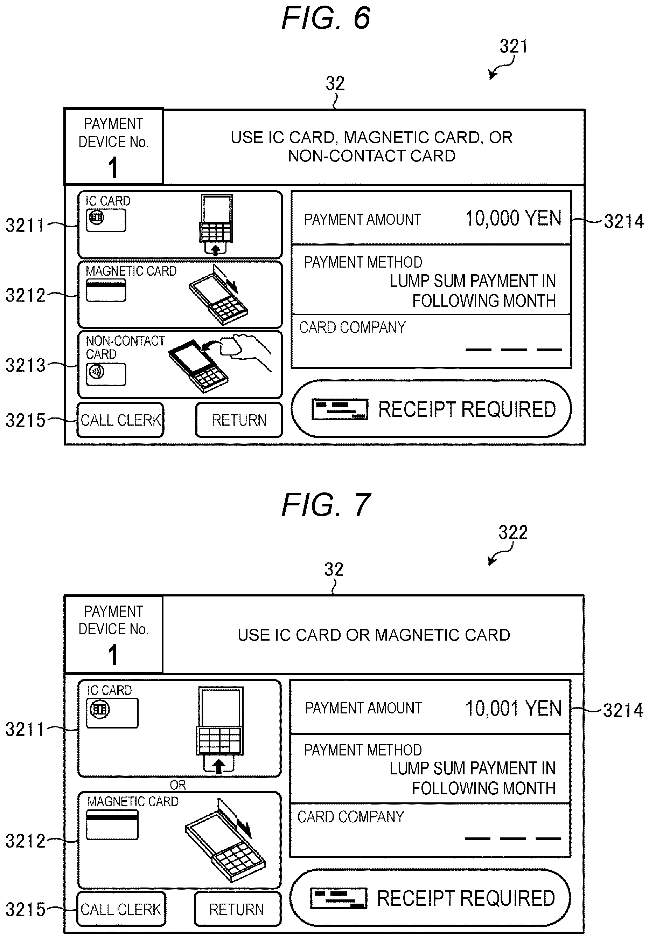

When the payment amount is less than or equal to the threshold (Yes at ACT 8), the control unit 30 (or the guidance unit 3002) causes the display unit 32 to display the three-way waiting screen 321 (ACT 9). FIG. 6 is a diagram illustrating an example of the three-way waiting screen 321.

As illustrated in FIG. 6, the three-way waiting screen 321 includes guide images 3211 to 3213, a total amount 3214, a clerk call button 3215, and the like. The total amount 3214 indicates a payment amount (which corresponds to the transaction amount included in the transaction information 312).

The guide image 3211 indicates a credit card information reading method in which a credit card (e.g., IC card) with an IC chip is inserted into a personal identification number (PIN) pad. The guide image 3212 indicates a credit card information reading method in which a credit card (or a magnetic card) with a magnetic stripe is passed through a slit. The guide image 3213 indicates a credit card information reading method in which a credit card (non-contact card) with a non-contact IC is held over the NFC reader 39.

The clerk call button 3215 receives a request to call a store clerk. When the clerk call button 3215 is operated, the control unit 30, for example, activates an indicator lamp of the payment device 3, sounds a buzzer of the payment device 3, or outputs a clerk call notification to another terminal device that is viewable by the store clerk.

The operator (such as a customer) of the payment device 3 can input credit card information using one of the three reading methods at the payment device 3 on which the three-way waiting screen 321 is displayed. In this case, all of the magnetic reader 37, the IC reader 38, and the NFC reader 39 of the payment device 3 are on standby for reading.

When the credit card information is acquired from a device, the control unit 30 determines that the operator has caused that device to read the credit card information. The control unit 30 (or the payment processing unit 3003) executes a credit card payment process based on the determination and the credit card information (ACT 10) and then ends the transaction process.

At ACT 8, when the payment amount is greater than the threshold (that is, the transaction amount is 10,001 yen or more) (No at ACT 8), the control unit 30 (or the guidance unit 3002) controls the display unit 32 to display a two-way waiting screen 322 (ACT 11). FIG. 7 is a diagram illustrating an example of the two-way waiting screen 322.

As illustrated in FIG. 7, the two-way waiting screen 322 includes the guide image 3211 indicating IC chip contact reading, the guide image 3212 indicating magnetic stripe reading, the total amount 3214, and the clerk call button 3215 and does not include the guide image 3213 indicating non-contact IC wireless reading. That is, the two-way waiting screen 322 presents two types of reading methods and indicates that non-contact IC wireless reading is not available for acquisition of credit card information.

The operator (such as a customer) of the payment device 3 can input credit card information by one of the two reading methods at the payment device 3 on which the two-way waiting screen 322 is displayed. Also in this case, all of the magnetic reader 37, the IC reader 38, and the NFC reader 39 of the payment device 3 are on standby for reading.

When the credit card information is output from a device, the control unit 30 determines that the operator has caused that device to read the credit card information. When it is determined that the NFC reader 39 has output the credit card information, the control unit 30 does not proceed with the process and maintains a standby state. When the credit card information is received from the magnetic reader 37 or the IC reader 38, the controller 30 advances the process to ACT 10.

As described above, according to the present embodiment, since an unusable reading method is excluded and only available reading methods are presented, time and effort can be saved, payment time can be reduced, and operational efficiency of a payment system can be improved. Also, the present embodiment provides a smooth process flow by eliminating steps that are difficult for the user to understand and tend to be misunderstood as errors and thereby makes it possible to reduce the occurrence of calls to a store clerk.

The payment device 3 may display text or an image on the two-way waiting screen 322 to indicate that non-contact IC wireless reading is not available for acquisition of credit card information.

Also, when credit card information is input from the NFC reader 39 even though the two-way waiting screen 322 is displayed (that is, the transaction amount is greater than the threshold), the payment device 3 (or the guidance unit 3002) may display information indicating that the input credit card information is invalid. Specifically, the guidance unit 3002 may cause the display unit 32 to display information indicating an error. Furthermore, the guidance unit 3002 may display, for example, information indicating that non-contact IC wireless reading cannot be used for the current payment amount.

The operation for selecting the payment method (ACT 4) may be received by the payment device 3 instead of the registration device 2.

The above-described first embodiment can be appropriately modified and implemented by changing a part of the configuration or the function of each device. Hereinafter, some variations of the above-described embodiment will be described as other embodiments. In the following, features different from those in the above-described embodiment will be mainly described. Also, the same reference numbers will be used for components that are the same as the components described above, and the detailed descriptions of those components will be omitted. The variations described below may be implemented individually or in any appropriate combination.

### (Second Embodiment)

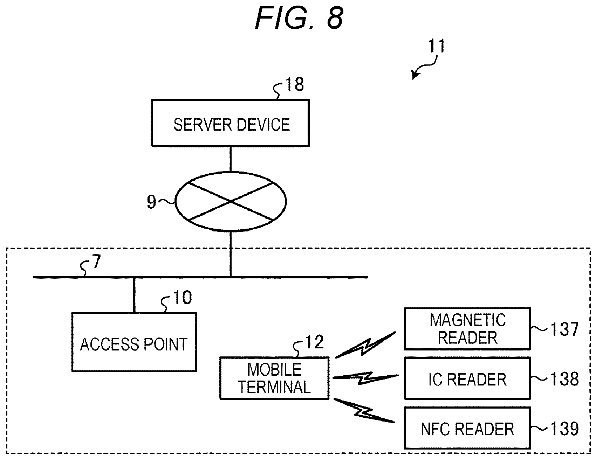

The present embodiment is a variation of the previous embodiment. FIG. 8 is a schematic diagram illustrating an example of a configuration of a transaction management system 11 according to a second embodiment. The transaction management system 11 includes a mobile terminal 12, a server device 18, and peripheral devices (a magnetic reader 137, an IC reader 138, and an NFC reader 139). The transaction management system 11 may further include a receipt printer or the like as one of the peripheral devices.

The mobile terminal 12 is connected to a network 7 such as a local area network (LAN) via an access point 10. The server device 18 and the mobile terminal 12 are connected via a public network 9 such as the Internet and the network 7 to be able to communicate with each other. In communication via the public network 9, encryption or a virtual private network (VPN) connection may be used as necessary. The mobile terminal 12 and the peripheral devices (the magnetic reader 137, the IC reader 138, the NFC reader 139, and the like) are connected via a communication interface conforming to a wireless communication standard such as Bluetooth (registered trademark) to be able to communicate with each other.

Note that the mobile terminal 12 may be configured to be able to communicate with the server device 18 without using the network 7. Various other devices may also be connected to the network 7. For example, a POS terminal with which a store clerk performs operations related to item registration and payment, a self-service POS terminal with which a customer performs operations related to item registration and payment, and a semi-self-service POS system with which a store clerk performs operations related to item registration and a customer performs operations related to payment may be connected to the network 7. The number of mobile terminals 12 and the number of payment devices 3 are not limited to the examples illustrated in the diagrams.

The mobile terminal 12 is, for example, a terminal device such as a tablet computer or a smartphone and includes an imaging unit, a display unit, an operation unit, a control unit, a storage unit, and the like. The imaging unit captures an image with an image sensor and outputs image information. The display unit is a display device such as a liquid crystal panel and displays various types of information under the control of the control unit. The operation unit is a touch panel provided over the display unit or hard keys and outputs a signal to the control unit based on a received operation. The storage unit is implemented by a storage medium such as a flash memory and retains stored information even when the power is cut off. The storage unit stores various application programs executed by the control unit, various setting values, and the like. The control unit includes a CPU, a ROM, and a RAM and implements various functions by executing application programs.

The mobile terminal 12 functions as a POS terminal by executing a mobile POS application or displaying a predetermined web page with a web browser. The mobile terminal 12 serving as a POS terminal starts a transaction by transmitting and receiving information to and from the server device 18. When the transaction starts, the server device 18 issues a transaction code.

The mobile terminal 12 serving as a POS terminal acquires image information of a code symbol attached to an item by using the imaging unit, acquires information (for example, an item code) by decoding the code symbol included in the image information, and transmits the information to the server device 18 and peripheral devices.

The server device 18 of the present embodiment is an example of a registration device and an assisting device. The server device 18 is, for example, a personal computer (PC) that includes a control unit including a CPU, a ROM, and a RAM and a storage unit implemented by a storage medium such as an HDD or a flash memory.

The control unit of the server device 18 of the present embodiment provides functions equivalent to the guidance unit 3002 of the previous embodiment. The control unit of the mobile terminal 12 provides functions equivalent to the transmission and reception unit 3001 and the payment processing unit 3003 in the previous embodiment.

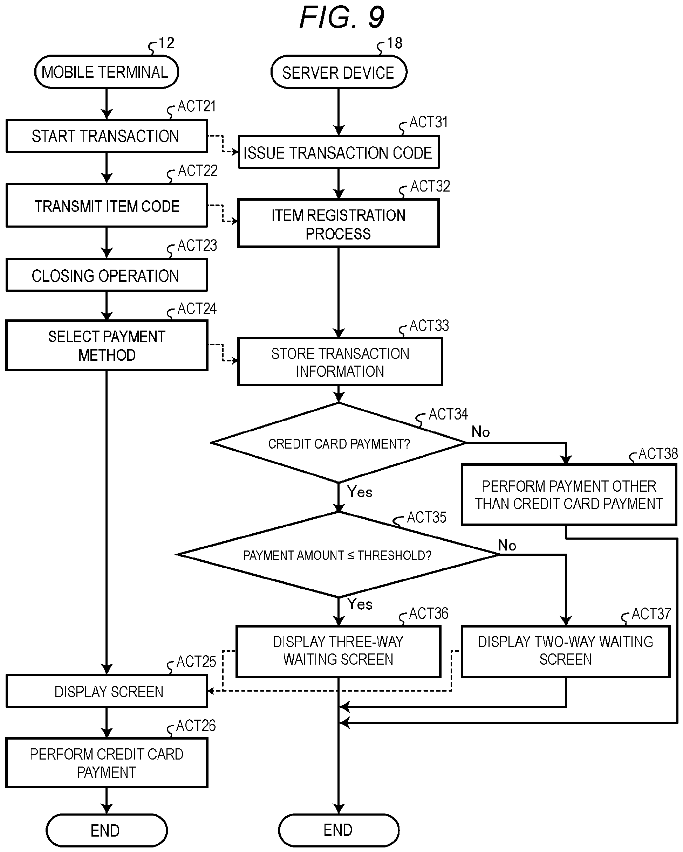

FIG. 9 is a diagram illustrating an example of a transaction process performed by the transaction management system 11. The transaction process illustrated in FIG. 9 is performed by the transaction management system 11 configured as described above. That is, the mobile terminal 12 starts a transaction by transmitting and receiving information to and from the server device 18 (ACT 21). At the start of the transaction, the server device 18 issues a transaction code (ACT 31).

The mobile terminal 12 reads item codes according to operations of the customer and transmits the item codes to the server device 18 (ACT 22). The server device 18 registers item information of items identified by the item codes received from the mobile terminal 12 in association with the transaction code (ACT 32).

When a closing operation (ACT 23) is performed at the mobile terminal 12, the mobile terminal 12 receives a selection of a payment method and outputs the selected payment method to the server device 18 (ACT 24).

The server device 18 stores transaction information in the storage unit based on the item information registered at ACT 32 and the payment method selected at ACT 24 (ACT 33) .

The transaction information stored in the storage unit by the server device 18 includes, for example, the following information.
· Transaction code
· Terminal code (identification information of the mobile terminal 12)
· Start time
· Payment instruction time
· Payment device code
· Transaction amount
· Payment method
Item information (item codes, item names, prices, quantities, and the like)
· Registration time

The terminal code in the present embodiment is a code that can identify the mobile terminal 12.

When the payment method included in the transaction information is not the credit card payment (No at ACT 34), the control unit of the server device 18 cooperates with the mobile terminal 12 to perform a payment process by using the payment method other than the credit card payment (ACT 38) and then ends the transaction process.

When the payment method included in the transaction information is the credit card payment (Yes at ACT 34), the control unit of the server device 18 determines whether the payment amount is less than or equal to a threshold (ACT 35) .

When the payment amount is less than or equal to the threshold (Yes at ACT 35), the control unit of the server device 18 causes the display unit of the mobile terminal 12 to display the three-way waiting screen 321 (see FIG. 6) (ACT 36) .

When the payment amount is greater than the threshold (No at ACT 35), the control unit of the server device 18 causes the display unit of the mobile terminal 12 to display the two-way waiting screen 322 (see FIG. 7) (ACT 37).

The control unit of the mobile terminal 12 displays a screen based on information transmitted from the server device 18 at ACT 36 or ACT 37 (ACT 25).

When the credit card information is output from one of the peripheral devices (the magnetic reader 137, the IC reader 138, and the NFC reader 139), the control unit of the mobile terminal 12 determines that the operator has caused the one of the peripheral devices to read the card information. The control unit uses the determination and the credit card information to execute a credit card payment process (ACT 26) and then ends the transaction process.

As described above, according to the present embodiment, since an unusable reading method is excluded and only available reading methods are presented, time and effort can be saved, checkout time can be reduced, and operational efficiency of a payment system can be improved. Also, the present embodiment provides a smooth process flow by eliminating steps that are difficult for the user to understand and tend to be misunderstood as errors and thereby makes it possible to reduce the occurrence of calls to a store clerk.

In the present embodiment, the server device 18 implements the registration device and the assisting device. However, this disclosure is not limited to this example. As another example, a mobile POS application executed by the mobile terminal 12 may include a program for causing the mobile terminal 12 to implement functional units corresponding to the acquisition unit and the guidance unit. In this case, the mobile terminal 12 functions as an assisting device.

Programs executed by each device of the above-described embodiments are pre-installed in a ROM or the like. Alternatively, programs executed by each device of the above-described embodiments may be provided on a computer-readable recording medium, such as a CD-ROM, a flexible disk (FD), a CD-R, or a digital versatile disk (DVD), in the form of installable or executable files.

Programs executed by the devices of the above-described embodiments may be stored in a computer connected to a network, such as the Internet, and may be downloaded via the network. Programs executed by the devices of the above-described embodiments may be provided or distributed via a network such as the Internet.

While certain embodiments have been described, the embodiments have been presented by way of example only, and are not intended to limit the scope of the disclosure. Indeed, the novel embodiments described herein may be embodied in a variety of other forms; furthermore, various omissions, substitutions, changes, and combinations in the form of the embodiments described herein may be made without departing from the scope of the disclosure. The accompanying claims and their equivalents are intended to cover such forms or modifications as would fall within the scope of the disclosure.

## Claims

1. An assisting device for assisting in inputting card information for credit card payment, the assisting device comprising:
a display device; and
a processor configured to:
acquire a transaction amount from a registration device that registers information on an item to be purchased,
determine whether the acquired transaction amount is less than or equal to a threshold, and
upon determining that the acquired transaction amount is less than or equal to the threshold, control the display device to display a first guide screen indicating that reading methods including non-contact IC wireless reading, magnetic stripe reading, and IC chip contact reading are available for inputting the card information, and
upon determining that the transaction amount is greater than the threshold, control the display device to display a second guide screen indicating that reading methods including the magnetic stripe reading and the IC chip contact reading and not including the non-contact IC wireless reading are available for inputting the card information.

2. The assisting device according to claim 1, wherein the processor is configured to, when the card information is input by the non-contact IC wireless reading even though the second guide screen is displayed, control the display device to display information indicating that the input card information is invalid.

3. The assisting device according to claim 1 or 2, wherein the processor is configured to control the display device to display the second guide screen including information indicating that the non-contact IC wireless reading is not available for inputting the card information.

4. The assisting device according to any one of claims 1 to 3, wherein the processor is configured to:
determine whether a selected payment method is the credit card payment, and
upon determining that a selected payment method is the credit card payment, determine whether the transaction amount is less than or equal to the threshold.

5. The assisting device according to claim 4, wherein the processor is configured to not determine whether the transaction amount is less than or equal to the threshold when the selected payment method is not the credit card payment.

6. The assisting device according to any one of claims 1 to 5, further comprising:
a near field communication (NFC) reader for the non-contact IC wireless reading;
a magnetic reader for the magnetic stripe reading; and
an IC reader for the IC chip contact reading.

7. The assisting device according to any one of claims 1 to 6, wherein the processor is configured to acquire transaction information including the transaction amount from a server configured to communicate with the registration device.

8. A method for assisting in inputting card information for credit card payment, the method comprising:
acquiring a transaction amount from a registration device that registers information on an item to be purchased;
determining whether the acquired transaction amount is less than or equal to a threshold;
upon determining that the acquired transaction amount is less than or equal to the threshold, displaying a first guide screen indicating that reading methods including non-contact IC wireless reading, magnetic stripe reading, and IC chip contact reading are available for inputting the card information; and
upon determining that the transaction amount is greater than the threshold, displaying a second guide screen indicating that reading methods including the magnetic stripe reading and the IC chip contact reading and not including the non-contact IC wireless reading are available for inputting the card information.

9. The method according to claim 8, further comprising:
receiving the card information by the non-contact IC wireless reading after the second guide screen is displayed; and
displaying information indicating that the input card information is invalid.

10. The method according to claim 8 or 9, wherein the second guide screen includes information indicating that the non-contact IC wireless reading is not available for inputting the card information.

11. The method according to any one of claims 8 to 10, further comprising:
determining whether a selected payment method is the credit card payment, wherein
whether the transaction amount is less than or equal to the threshold is determined after determining that the selected payment method is the credit card payment.

12. The method according to claim 11, wherein whether the transaction amount is less than or equal to the threshold is not determined when the selected payment method is not the credit card payment.

13. The method according to any one of claims 8 to 12, further comprising:
receiving the card information from one of: a near field communication (NFC) reader for the non-contact IC wireless reading, a magnetic reader for the magnetic stripe reading, and an IC reader for the IC chip contact reading.

14. The method according to any one of claims 8 to 13, further comprising:
acquiring transaction information including the transaction amount from a server configured to communicate with the registration device.

15. A transaction management system, comprising:
a server device; and
a point-of sale (POS) terminal device that is connectable to the server device and includes a display device, wherein
the server device is configured to:
register information on an item to be purchased and calculate a transaction amount for the item,
determine whether the acquired transaction amount is less than or equal to a threshold,
upon determining that the acquired transaction amount is less than or equal to the threshold, cause the display device of the terminal device to display a first guide screen indicating that reading methods including non-contact IC wireless reading, magnetic stripe reading, and IC chip contact reading are available for inputting card information for credit card payment, and
upon determining that the transaction amount is greater than the threshold, cause the display device of the terminal device to display a second guide screen indicating that reading methods including the magnetic stripe reading and the IC chip contact reading and not including the non-contact IC wireless reading are available for inputting the card information.
